# EUROPEAN PATENT SPECIFICATION

(11) **EP 1 146 248 B1**
(45) Date of publication and mention of the grant of the patent: **13.06.2007**
(21) Application number: 01108935.6
(22) Date of filing: 10.04.2001
(51) Int. Cl.: F16F 15/00

(54) **Torsional-vibration damping device for propeller shafts and similar**
Torsionsschwingungsdämpfer für eine Antriebswelle und ähnliches
Amortisseur de vibrations en torsion pour arbre de transmission et similaires

(30) Priority: 14.04.2000 IT BO000219
(43) Date of publication of application: 17.10.2001
(73) Proprietor: FERRARI S.p.A., 41100 Modena (IT)
(72) Inventor: Longhi, Alberto, 44100 Ferrara (IT); Visconti, Amedeo, 10138 Torino (IT)
(74) Representative: Jorio, Paolo

(56) References cited:
- US-A- 5 553 514
- US-A- 6 012 333
- US-A- 6 032 552

## Description

The present invention relates to a torsional-vibration damping device for propeller shafts and similar.

More specifically, the present invention relates to a torsional-vibration damping device for the propeller shaft of an internal combustion engine motor vehicle, to which application the following description refers purely by way of example.

As is known, automotive transmissions are characterized by a high operating noise level, which is mainly due to so-called gear "chatter" and to the structural rigidity of the transmission which determines the actual vibration frequencies and, hence, the oscillations perceptible on the vehicle.

Gear chatter is mainly due to the fact that, as opposed to being constant, the drive torque of an internal combustion engine is subject to high-frequency fluctuations which are only partly damped by the flywheel.

Whereas the noise level produced by structural vibration of the transmission is unavoidable, gear chatter on currently used transmissions is attenuated using a damping element designed to prevent the high-frequency oscillations of the drive torque from reaching the transmission gears, and which is normally inserted in the clutch disk and commonly known as a flexible coupling.

Unfortunately, being passive, the damping element fails to entirely eliminate fluctuation of the drive torque, so that the noise level produced by transmission gear chatter still remains. Another drawback of currently used flexible couplings is that efficiency decreases with time, and at a rate which increases alongside the power of the internal combustion engine on which the clutch is installed.

US-A-6 012 333 discloses a torsional vibration damping device according to the preamble of claim 1.

It is an object of the present invention to provide a torsional-vibration damping device for propeller shafts and similar, designed to entirely eliminate fluctuation of the drive torque, and which has a working life comparable with that of the motor vehicle on which it is installed.

The aforemention object is acheeved by the special technical features of claim 1.

According to the present invention, there is provided a torsional-vibration damping device for propeller shafts and similar, characterized by comprising two contiguous portions of a propeller shaft, and an active compensating joint connecting said two portions mechanically; said active compensating joint being made of a composite material having piezoelectric properties and deformable on command by application of a voltage.

A non-limiting embodiment of the present invention will be described by way of example with reference to the accompanying drawings, in which:
Figure 1 shows schematically, with parts removed for clarity, a torsional-vibration damping device in accordance with the teachings of the present invention;
Figure 2 shows a view in perspective of a detail of the Figure 1 damping device;
Figure 3 shows an example time graph of torsional vibration transmitted to the propeller shaft, and the corresponding compensating torsional deformation imparted to the propeller shaft by the Figure 1 damping device.

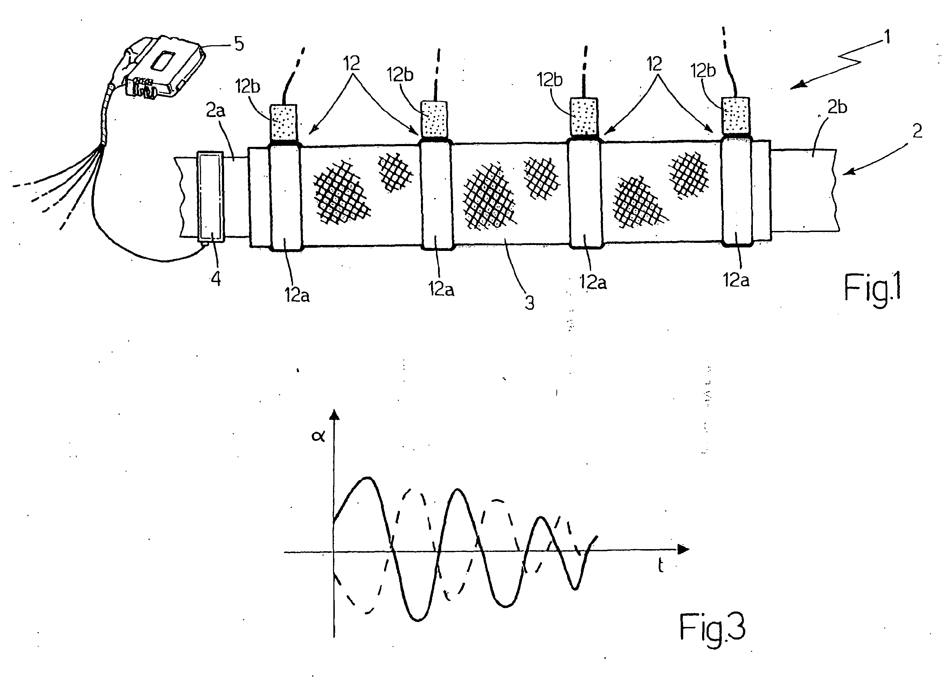

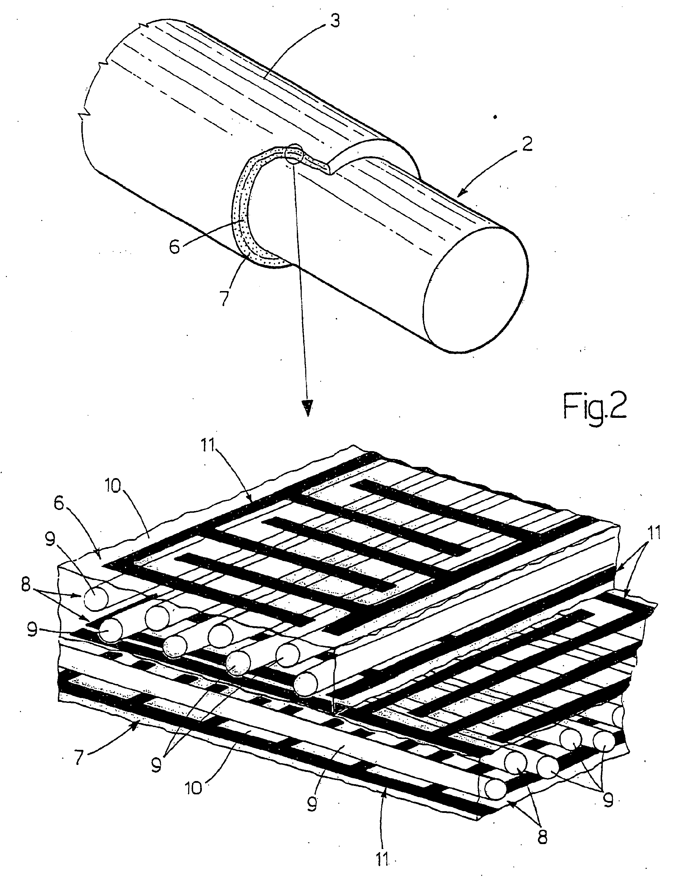

With reference to Figures 1 and 2, number 1 indicates as a whole a torsional-vibration damping device for propeller shafts and similar, and which may be used to advantage to eliminate the torsional vibration normally occurring on certain types of automotive propeller shafts, such as the shaft connecting the clutch to the transmission, connecting the transmission to the differential, connecting the steering wheel to the steering box, etc.

In the following description, specific reference is made purely by way of example to a torsional-vibration damping device 1 applied to the propeller shaft 2 connecting the transmission to the differential.

Damping device 1 comprises two contiguous portions 2a and 2b of propeller shaft 2; an active compensating joint 3 connecting portions 2a and 2b of propeller shaft 2; and a shaft speed sensor 4 fitted to propeller shaft 2 upstream from active compensating joint 3 in the drive torque transmission direction.

Active compensating joint 3 is made of a composite material deformable on command by applying a voltage; and damping device 1 also comprises an electronic central control unit 5 for controlling active compensating joint 3 on the basis of signals from speed sensor 4, so as to produce, on command, controlled deformation of the joint and torsional deformations in phase opposition with the torsional vibrations induced by the torque transmitted to propeller shaft 2.

More specifically, and as explained in more detail later on, active compensating joint 3 is defined by a member made of composite material comprising active fibers of a material with piezoelectric properties. When subjected to an electric field, the fibers are deformed and altered in length to deform the enclosing body. The type of deformation produced depends, obviously, on how the active fibers of piezoelectric material are distributed within the body.

With reference to Figures 1 and 2, in the example shown, active compensating joint 3 connecting the two contiguous portions 2a and 2b of propeller shaft 2 is defined by a sleeve 3 fitted to propeller shaft 2 so as to enclose both portions 2a and 2b of propeller shaft 2. Sleeve 3 is defined by two layers 6 and 7 of active composite material, each of which is defined by one or more (in the Figure 2 example, two) flat belts 8 of monofilament active fibers 9 made of material with piezoelectric properties and embedded in a matrix 10 of polymer material; and two surface electrodes 11 made of electrically conducting material and located on opposite sides of flat belts 8 of each layer 6, 7 of composite material.

So located, the electrodes of each layer 6, 7 of active composite material define a parallel-plate capacitor capable of generating between its plates, i.e. in the space in which monofilament active fibers 9 are distributed, an electric field depending on the voltage applied to the plates.

The monofilament active fibers 9 in each flat belt 8 are made, as stated, of material with piezoelectric properties, so as to change in length when subjected to an electric field, and extend parallel to one another along the whole axial length of sleeve 3. More specifically, in the example shown, monofilament active fibers 9 of each flat belt 8 extend parallel to one another along a substantially helical path, so that any change in length of the fibers twists the body of sleeve 3.

It should be pointed out that, in the example shown, the helical path of monofilament active fibers 9 in layer 6 coils the opposite way to that of monofilament active fibers 9 in layer 7, so as to permit torsional deformation of the body of sleeve 3 in the rotation direction of propeller shaft 2 and also in the opposite direction.

It should also be pointed out that the two contiguous portions 2a and 2b of propeller shaft 2 may be either integral in one piece with each other or separate. In the first case (Figure 1) active compensating joint 3 produces elastic deformations in the body of propeller shaft 2; whereas, in the second, it simply produces rotational movements between the two contiguous portions 2a and 2b, or rather the two lengths, of propeller shaft 2.

With reference to Figure 2, in the example shown, each surface electrode 11 is defined by a copper mesh arranged evenly on or close to the surface of layer 6, 7 of composite material, and monofilament active fibers 9 are made of piezoceramic material, such as lead zirconate titanate (known as PZT) currently produced by CeraNova Corporation in America.

Speed sensor 4 provides for detecting, instant by instant, the angular velocity of propeller shaft 2; and electronic central control unit 5 analyzes the signals from speed sensor 4 to determine the presence of fluctuations in the drive torque to the shaft, and controls active compensating joint 3 so as to produce, in the body of active compensating joint 3, torsional deformations capable of eliminating the torsional vibrations from the propeller shaft.

It should be pointed out that speed sensor 4 may be replaced with a known torque sensor - also indicated 4 for the sake of simplicity - for detecting the torque transmitted to propeller shaft 2 instant by instant.

With reference to Figure 1, in the example shown, electronic central control unit 5 is connected electrically to active compensating joint 3 by known sliding contacts 12. In the example shown, each electrode 11 of sleeve 3 is connected to electronic central control unit 5 by a sliding contact 12 comprising a conducting ring 12a fitted to sleeve 3 or to either one of contiguous portions 2a, 2b of propeller shaft 2, and a fixed conducting brush 12b resting on conducting ring 12a so as to slide on the outer surface of the ring. Conducting ring 12a is connected electrically to electrode 11; and brush 12b is connected electrically to electronic central control unit 5.

Operation of damping device 1 will now be described assuming propeller shaft 2 is rotating at a given angular velocity with no fluctuations in the transmitted torque, and that sensor 4 is a speed sensor.

When a fluctuation occurs in the torque transmitted to the shaft, the speed of propeller shaft 2 - or, rather, the speed of the portion of propeller shaft 2 upstream from active compensating joint 3 in the torque transmission direction - increases or decreases slightly depending on the degree of fluctuation. Assuming the portion of propeller shaft 2 downstream from active compensating joint 3 in the torque transmission direction maintains the initial speed by force of inertia, the fluctuation in the torque produces on propeller shaft 2 a torsional deformation which is eliminated in damped oscillatory manner when the whole of propeller shaft 2 is brought to the same speed.

By analyzing in real time the signals from speed sensor 4 located upstream from active compensating joint 3 in the torque transmission direction, electronic central control unit 5, on determining a sudden increase or decrease in the rotation speed of the shaft, i.e. a fluctuation in the transmitted torque, determines, on the basis of a mathematical model in the system, the degree of torsional deformation the fluctuation would produce on propeller shaft 2.

With reference to Figure 3, having established the time pattern of the torsional deformation produced on propeller shaft 2 by the fluctuation in the torque (continuous-line curve), electronic central control unit 5 supplies electrodes 11 of composite-material layers 6, 7 of active compensating joint 3 with voltages of a given value and pattern, so as to produce torsional deformations (dash-line curve) of a pattern complementary, instant by instant, to those produced by the fluctuation in the torque on propeller shaft 2, and so eliminate the outgoing torsional vibration of propeller shaft 2.

The main advantage of damping devices as described and illustrated herein is that of totally eliminating the outgoing torsional vibration of propeller shaft 2. Damping device 1 is also easy to produce and comprises no components particularly susceptible to wear.

Clearly, changes may be made to damping device 1 as described and illustrated herein without, however, departing from the scope of the present invention.

In particular, in a variation not shown, as opposed to connecting the two contiguous portions 2a, 2b of propeller shaft 2, active compensating joint 3 may be defined by a portion of propeller shaft 2 interposed between contiguous portions 2a and 2b. Active compensating joint 3 may even be defined by the whole of propeller shaft 2, in which case, the two contiguous portions 2a, 2b of propeller shaft 2 also form part of the active joint.

## Claims

1. A torsional-vibration damping device (1) for propeller shafts and similar comprising two contiguous portions (2a, 2b) of a propeller shaft (2), and an active compensating joint (3) connecting said two portions (2a, 2b) mechanically; said active compensating joint (3) being made of a composite material having piezoelectric properties and deformable on command by application of a voltage and said torsional-vibration damping device (1) also comprising an electronic central control unit (5) for controlling the active compensating joint (3) so as to produce, on command, controlled deformation of the joint (3) and torsional deformations in phase opposition with the torsional vibrations transmitted to the propeller shaft (2) ; **said torsional -vibration damping device (1) being characterized by** also comprising a shaft speed sensor (4) located along said propeller shaft (2), upstream from the active compensating joint (3) in the drive torque transmission direction; said speed sensor (4) detecting, instant by instant, the angular velocity of the propeller shaft (2), and said electronic central control unit (5) comprising means for determining the presence of torsional vibrations transmitted to the propeller shaft (2) by analyzing the signals from said speed sensor (4).

2. A damping device as claimed in Claim 1, **characterized by** comprising a torque sensor (4) located along said propeller shaft (2), upstream from the active compensating joint (3) in the drive torque transmission direction; the torque sensor (4) detecting, instant by instant, the value of the torque transmitted to the propeller shaft (2); and the electronic central control unit (5) comprising means for determining the presence of torsional vibrations transmitted to the propeller shaft (2) by analyzing the signals from said torque sensor (4).

3. A damping device as claimed in any one of the foregoing Claims, **characterized in that** said active compensating joint (3) is defined by a member made of composite material comprising active fibers (9) made of material having piezoelectric properties; said active fibers (9), when subjected to an electric field, being deformed by changing in length, so as to deform the enclosing body.

4. A damping device as claimed in Claim 3, **characterized in that** said active compensating joint (3) is defined by a member made of composite material and comprising at least one layer of active composite material (6, 7) defined by at least one flat belt (8) of active fibers (9) embedded in a matrix (10) of polymer material; and two electrodes (11) made of electrically conducting material and located on opposite sides of said at least one flat belt (8) of active fibers (9); said active fibers (9) being monofilament fibers.

5. A damping device as claimed in Claim 4, **characterized in that** said active fibers (9) extend parallel to one another and along a substantially helical path along the whole axial length of the active compensating joint (3).

6. A damping device as claimed in any one of the foregoing Claims, **characterized in that** said active compensating joint (3) comprises a sleeve (3) fitted to both the contiguous portions (2a, 2b) of a propeller shaft (2).

7. A damping device as claimed in any one of Claims 1 to 5, **characterized in that** said active compensating joint (3) defines at least one portion of said propeller shaft (2) interposed between said two contiguous portions (2a, 2b) of the propeller shaft (2).

8. A damping device as claimed in any one of Claims 3 to 7, **characterized in that** said active fibers (9) are made of piezoceramic material, such as lead zirconate titanate (PZT).

9. A damping device as claimed in any one of Claims 4 to 8, **characterized in that** each said electrode (11) comprises a mesh made of electrically conducting material and located on or close to the surface of said layer of composite material (6, 7).

## Patentansprüche

1. Torsionsschwingungs-Dämpfungsvorrichtung (1) für Antriebswellen und dergleichen, mit zwei aneinander grenzenden Abschnitten (2a, 2b) einer Antriebswelle (2) und einer aktiven Kompensationsverbindung (3), die die zwei Abschnitte (2a, 2b) mechanisch verbindet; wobei die aktive Kompensationsverbindung (3) aus einem Verbundwerkstoff hergestellt ist, der piezoelektrische Eigenschaften besitzt und auf Befehl durch Anlegen einer Spannung verformbar ist, wobei die Torsionsschwingungs-Dämpfungsvorrichtung (1) außerdem eine elektronische zentrale Steuereinheit (5) zum Steuern der aktiven Kompensationsverbindung (3) umfasst, damit sie auf Befehl eine gesteuerte Verformung der Verbindung (3) und Torsionsverformungen gegenphasig zu den Torsionsschwingungen, die an die Antriebswelle (2) übertragen werden, erzeugt; wobei die Torsionsschwingungs-Dämpfungsvorrichtung (1) **dadurch gekennzeichnet ist, dass** sie außerdem einen Wellendrehzahlsensor (4) umfasst, der sich längs der Antriebswelle (2) stromaufseitig von der aktiven Kompensationsverbindung (3) in der Antriebsdrehmoment-Übertragungsrichtung befindet; wobei der Drehzahlsensor (4) Zeitpunkt für Zeitpunkt die Winkelgeschwindigkeit der Antriebswelle (2) erfasst und wobei die elektronische zentrale Steuereinheit (5) Mittel umfasst, um das Vorhandensein von Torsionsschwingungen zu erfassen, die an die Antriebswelle (2) übertragen werden, indem die Signale von dem Drehzahlsensor (4) analysiert werden.

2. Dämpfungsvorrichtung nach Anspruch 1, **gekennzeichnet durch** einen Drehmomentsensor (4), der sich längs der Antriebswelle (2) stromaufseitig von der aktiven Kompensationsverbindung (3) in der Antriebsdrehmoment-Übertragungsrichtung befindet; wobei der Drehmomentsensor (4) Zeitpunkt für Zeitpunkt den Wert des an die Antriebswelle (2) übertragenen Drehmoments erfasst, wobei die elektronische zentrale Steuereinheit (5) Mittel umfasst, um das Vorhandensein von Torsionsschwingungen zu erfassen, die an die Antriebswelle (2) übertragen werden, indem die Signale von dem Drehmomentsensor (4) analysiert werden.

3. Dämpfungsvorrichtung nach einem der vorangehenden Ansprüche, **dadurch gekennzeichnet, dass** die aktive Kompensationsverbindung (3) durch ein Element definiert ist, das aus einem Verbundwerkstoff hergestellt ist, der aktive Fasern (9) enthält, die aus einem Werkstoff mit piezoelektrischen Eigenschaften hergestellt sind; wobei die aktiven Fasern (9) dann, wenn an sie ein elektrisches Feld angelegt wird, durch Ändern der Länge verformt werden, wodurch der umschlossene Körper verformt wird.

4. Dämpfungsvorrichtung nach Anspruch 3, **dadurch gekennzeichnet, dass** die aktive Kompensationsverbindung (3) durch ein Element definiert ist, das aus einem Verbundwerkstoff hergestellt ist und wenigstens eine Lage aus einem aktiven Verbundwerkstoff (6, 7) umfasst, die definiert ist durch wenigstens einen flachen Riemen (8) aus aktiven Fasern (9), die in einen Grundstoff (10) aus einem Polymerwerkstoff eingebettet sind; und durch zwei Elektroden (11), die aus einem elektrisch leitenden Werkstoff hergestellt sind und sich auf gegenüberliegenden Seiten des wenigstens einen flachen Riemens (8) aus aktiven Fasern (9) befinden; wobei die aktiven Fasern (9) Monofilament-Fasern sind.

5. Dämpfungsvorrichtung nach Anspruch 4, **dadurch gekennzeichnet, dass** sich die aktiven Fasern (9) zueinander parallel und längs eines im Wesentlichen schraubenlinienförmigen Weges längs der gesamten axialen Länge der aktiven Kompensationsverbindung (3) erstrecken.

6. Dämpfungsvorrichtung nach einem der vorhergehenden Ansprüche, **dadurch gekennzeichnet, dass** die aktive Kompensationsverbindung (3) eine Hülse (3) umfasst, die auf beide aneinander grenzenden Abschnitte (2a, 2b) der Antriebswelle (2) aufgesteckt ist.

7. Dämpfungsvorrichtung nach einem der Ansprüche 1 bis 5, **dadurch gekennzeichnet, dass** die aktive Kompensationsverbindung (3) wenigstens einen Abschnitt der Antriebswelle (2) definiert, der zwischen die zwei aneinander grenzenden Abschnitte (2a, 2b) der Antriebswelle (2) eingefügt ist.

8. Dämpfungsvorrichtung nach einem der Ansprüche 3 bis 7, **dadurch gekennzeichnet, dass** die aktiven Fasern (9) aus einem piezokeramischen Werkstoff wie etwa Bleizirkonat-Titanat (PZT) hergestellt sind.

9. Dämpfungsvorrichtung nach einem der Ansprüche 4 bis 8, **dadurch gekennzeichnet, dass** jede Elektrode (11) ein Maschengitter aufweist, das aus einem elektrisch leitenden Material hergestellt ist und sich auf der Oberfläche der Lage aus Verbundwerkstoff (6, 7) oder in deren Nähe befindet.

## Revendications

1. Amortisseur de vibrations de torsion (1) pour arbres de transmission et équipements similaires, comprenant deux parties contiguës (2a, 2b) d'un arbre de transmission (2) et un joint de compensation actif (3) reliant mécaniquement lesdites deux parties (2a, 2b) ; ledit joint de compensation actif (3) étant constitué d'un matériau composite ayant des propriétés piézoélectriques et étant déformable sur commande par application d'une tension et ledit amortisseur de vibrations de torsion (1) comprenant également une unité de commande centrale électronique (5) pour commander le joint de compensation actif (3) de manière à produire, sur commande, une déformation contrôlée du joint (3) et des déformations de torsion en opposition de phase avec les vibrations de torsion transmises à l'arbre de transmission (2) ; ledit amortisseur de vibrations de torsion (1) étant **caractérisé par le fait qu'**il comprend en outre un détecteur de vitesse d'arbre (4) situé le long dudit arbre de transmission (2), en amont du joint de compensation actif (3) dans la direction de transmission du couple d'entraînement ; ledit détecteur de vitesse (4) détectant en continu la vélocité angulaire de l'arbre de transmission (2) et ladite unité de commande centrale électronique (5) comprenant des moyens de déterminer la présence de vibrations de torsion transmises à l'arbre de transmission (2) en analysant les signaux provenant dudit détecteur de vitesse (4).

2. Amortisseur selon la revendication 1, **caractérisé par le fait qu'**il comprend un détecteur de couple (4) situé le long dudit arbre de transmission (2), en amont du joint de compensation actif (3) dans la direction de transmission de couple d'entraînement ; le détecteur de couple (4) détectant en continu la valeur du couple transmis à l'arbre de transmission (2) ; et l'unité de commande centrale électronique (5) comprenant des moyens de détection de la présence des vibrations de torsion transmises à l'arbre de transmission (2) en analysant les signaux provenant dudit détecteur de couple (4).

3. Amortisseur selon l'une quelconque des revendications précédentes, **caractérisé en ce que** ledit joint de compensation actif (3) est défini par un élément constitué de matériau composite comprenant des fibres actives (9) constituées d'un matériau ayant des propriétés piézoélectriques ; lesdites fibres actives (9), lorsqu'elles sont soumises à un champ électrique, étant déformées par une modification en longueur, de manière à déformer le corps les renfermant.

4. Amortisseur selon la revendication 3, **caractérisé en ce que** ledit joint de compensation actif (3) est défini par un élément constitué de matériau composite et comprenant au moins une couche de matériau composite actif (6, 7) définie par au moins une courroie plate (8) de fibres actives (9) intégrées dans une matrice (10) de matériau polymère ; et deux électrodes (11) constituées de matériau électriquement conducteur et situées sur les côtés opposés de ladite au moins une courroie plate (8) de fibres actives (9) ; lesdites fibres actives (9) étant des fibres à un seul filament.

5. Amortisseur selon la revendication 4, **caractérisé en ce que** lesdites fibres actives (9) s'étendent parallèlement les unes aux autres et le long d'un trajet sensiblement hélicoïdal le long de toute la longueur axiale du joint de compensation actif (3).

6. Amortisseur selon l'une quelconque des revendications précédentes, **caractérisé en ce que** ledit joint de compensation actif (3) comprend un manchon (3) monté sur les deux parties contiguës (2a, 2b) d'un arbre de transmission (2).

7. Amortisseur selon l'une quelconque des revendications 1 à 5, **caractérisé en ce que** ledit joint de compensation actif (3) définit au moins une partie dudit arbre de transmission (2) interposée entre lesdites deux parties contiguës (2a, 2b) de l'arbre de transmission (2).

8. Amortisseur selon l'une quelconque des revendications 3 à 7, **caractérisé en ce que** lesdites fibres actives (9) sont constituées d'un matériau piézocéramique, tel que du titanate-zirconate de plomb (PZT).

9. Amortisseur selon l'une quelconque des revendications 4 à 8, **caractérisé en ce que** chacune desdites électrodes (11) comprend un maillage constitué d'un matériau électriquement conducteur et situé sur ou à proximité de la surface de ladite couche de matériau composite (6, 7).
